# EUROPÄISCHE PATENTSCHRIFT

(11) **EP 1 741 956 B1**
(45) Veröffentlichungstag und Bekanntmachung des Hinweises auf die Patenterteilung: **14.10.2009**
(21) Anmeldenummer: 06013980.5
(22) Anmeldetag: 06.07.2006
(51) Int. Cl.: F16H 3/42

(54) **Schaltgetriebe**
Transmission
Transmission

(30) Priorität: 06.07.2005 AT 11422005
(43) Veröffentlichungstag der Anmeldung: 10.01.2007
(73) Patentinhaber: Täuber, Gerald, 8521 Wettmannstätten (AT); Jäger, Harald, 8142 Wundschuh (AT)
(72) Erfinder: Täuber, Gerald, 8521 Wettmannstätten (AT); Jäger, Harald, 8142 Wundschuh (AT)
(74) Vertreter: Kopecky, Helmut

(56) Entgegenhaltungen:
- CA-A1- 2 100 896
- DE-A1- 2 001 198
- US-A- 3 608 390
- US-A- 5 653 143

## Beschreibung

Die Erfindung betrifft ein Schaltgetriebe mit zwei oder mehreren an einer Welle drehfest angeordneten, unterschiedliche Zähnezahlen aufweisenden Zahnrädern mit jeweils einer konischen Verzahnung (schräg oder gerade), die nach Art eines Stufenräderkegels an der Welle angeordnet sind und mit einem wahlweise mit jeweils einem der Zahnräder, die gleiche Module und unterschiedliche Teilkreisdurchmesser aufweisen, in Eingriff bringbaren Gegenzahnrad sowie einer einen Eingriff des Gegenzahnrads mit unterschiedlichen Zahnrädern bewirkenden Schaltvorrichtung, wobei den Stufenräderkegel bildende Zahnräder jeweils von zwei etwa um die Hälfte der Zahnbreite ihrer Zähne axial verschobenen Teilen gebildet sind, die sich jeweils um einen Teil um die Welle erstrecken, wobei die Zähne jedes Zahnrades sich durchgehend über den Umfang des Zahnrades mit etwa der Hälfte ihrer Breite erstrecken und wobei weiters jeweils ein Teil eines ersten Zahnrades sich mit einem Teil eines zweiten Zahnrades ergänzt zu einer sich um den gesamten Umfang erstreckenden Übergangsstufe, und wobei weiters die Schaltvorrichtung ein Steuergerät ausweist, das eine Stelleinrichtung zur Durchführung einer Relativbewegung zwischen dem Stufenräderkegel und dem Gegenzahnrad ansteuert, wobei die Relativbewegung über das Steuergerät in Abhängigkeit des Drehwinkels der Zahnräder des Stufenräderkegels über eine Zeitdauer erfolgt, die einen Bruchteil der Zeit für eine einzige Umdrehung des Stufenräderkegels beträgt, vorzugsweise über eine maximale Zeitdauer der Zeit, die der Stufenräderkegel für eine halbe Umdrehung benötigt, und wobei der Schaltvorgang in Abhängigkeit der Eingriffposition der Zahnräder des Stufenräderkegels mit dem Gegenzahnrad erfolgt

Ein Schaltgetriebe dieser Art, das auch als Vielgangzahnradgetriebe bezeichnet wird, ist beispielsweise aus der gattungsgemäße US 3 608 390 A bekannt und in ähnlicher Bauweise von der Firma C.H. Schäfer Getriebe GmbH gebaut worden. Der Vorteil eines Getriebes dieser Art ist, dass es unter Last schaltbar ist und dass die Drehzahländerung ohne Unterbrechung des Kraftflusses erfolgt. Ein Getriebe dieser Art kann in beiden Richtungen betrieben werden. Der Stufenräderkegel ermöglicht eine vielstufige und auch feinstufige Drehzahlregelung unter Last, d.h. ohne Momentenrücknahme seitens eines Antriebsaggregates und ohne ein Kuppeln während des Schaltvorganges.

Schaltgetriebe dieser Art können in nahezu allen Zweigen des Maschinen- und Anlagenbaus eingesetzt werden.

Die Erfindung bezweckt eine Weiterentwicklung eines Schaltgetriebes der eingangs beschriebenen Art dahingehend, dass es für hohe und höchste Drehzahlen einsetzbar ist, wobei der Schaltvorgang in einer äußerst kurzen Zeitspanne durchführbar ist.

Diese Aufgabe wird erfindungsgemäß dadurch gelöst, dass mit dem Stufenräderkegel eine Steuerscheibe drehzahlmäßig gekoppelt ist, deren Schalt-Drehposition von einem Positionsgeber detektierbar ist, wobei die Stelleinrichtung mit der Steuerscheibe mittels Aktivierung durch den Positionsgeber koppelbar ist.

Als Positionsgeber kann ein mechanischer, ein optisch wirkender oder ein elektrisch ansprechender vorgesehen sein.

Gemäß einer bevorzugten Ausführungsform ist das Gegenzahnrad mittels der Stelleinrichtung, vorzugsweise ausgebildet als Schaltgabel, entlang einer parallel zur Erzeugenden des Stufenräderkegels angeordneten Welle verschiebbar, wobei die Stelleinrichtung mit einem Steuerschieber koppelbar ist, vorzugsweise hydraulisch, welche Koppelung in Abhängigkeit einer Aktivierung durch den Positionsgeber durchführbar ist, wobei vorteilhaft der Steuerschieber mittels einer mit einer Schaltkurve versehenen Steuerscheibe verschiebbar ist, wobei die Steuerscheibe synchron oder in einem vorbestimmten Übersetzungsverhältnis mit der Welle des Stufenräderkegels drehbar ist.

Eine weitere bevorzugte Ausführungsform ist dadurch gekennzeichnet, dass die Stelleinrichtung mit jeweils in einer Ausnehmung verschiebbar gelagerten Federbolzen versehen ist, die mit einem hydraulisch betätigbaren Mitnahmebolzen des Steuerschiebers bewegbar sind, wobei der Mitnahmebolzen unter Zurückdrängen eines der Federbolzen in die Ausnehmung dieses Federbolzens der Stelleinrichtung unter Koppelung des Steuerschiebers mit der Stelleinrichtung einbringbar ist.

Zum Schalten, d.h. Verschieben, des Gegenzahnrades ist vorzugsweise das Steuergerät betätigbar, bei dessen Betätigung ein Hydraulikventil, vorzugsweise ein Hydraulikmagnetventil, aus einer geschlossenen Position in eine offene, den Mitnahmebolzen aktivierbare Position bringbar ist, wobei der Zeitpunkt der Aktivierung des Hydraulikventils vom Positionsgeber bestimmbar ist.

Zur Erhöhung der Gangzahl ist zweckmäßig ein zweites Gegenzahnrad auf einer eigenen weiteren Welle vorgesehen und der Antrieb erfolgt über das eine Gegenzahnrad und der Abtrieb über das andere Gegenzahnrad.

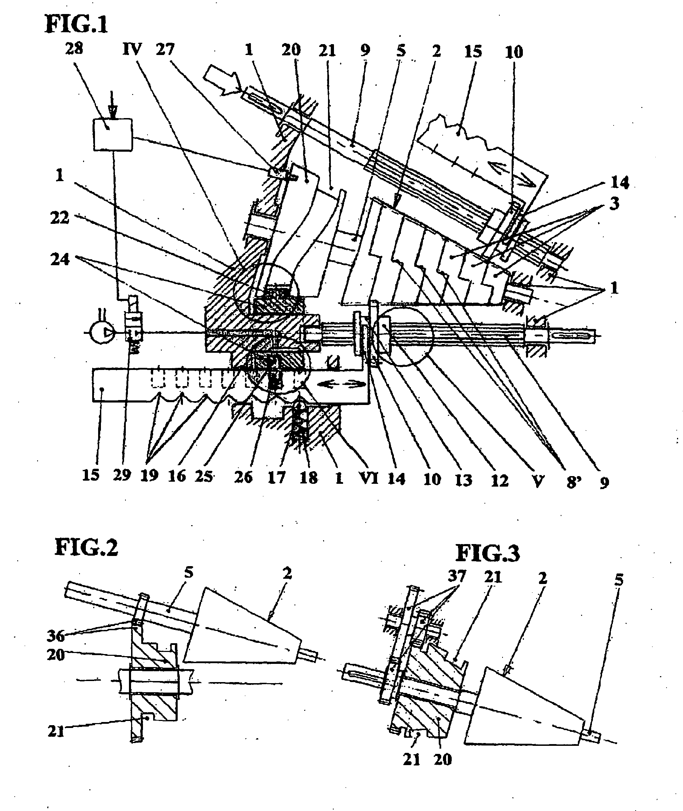

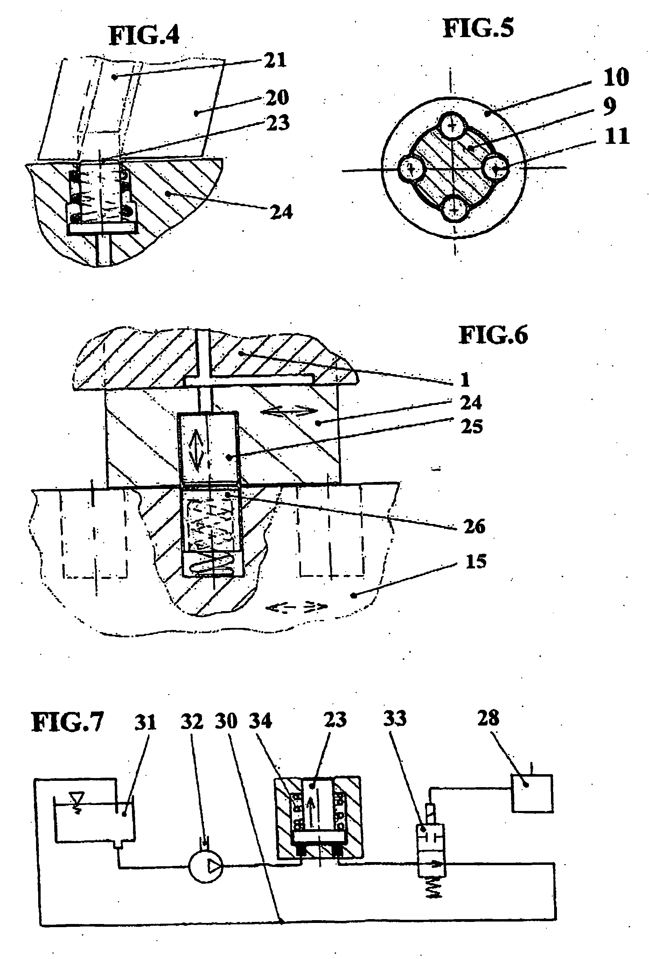

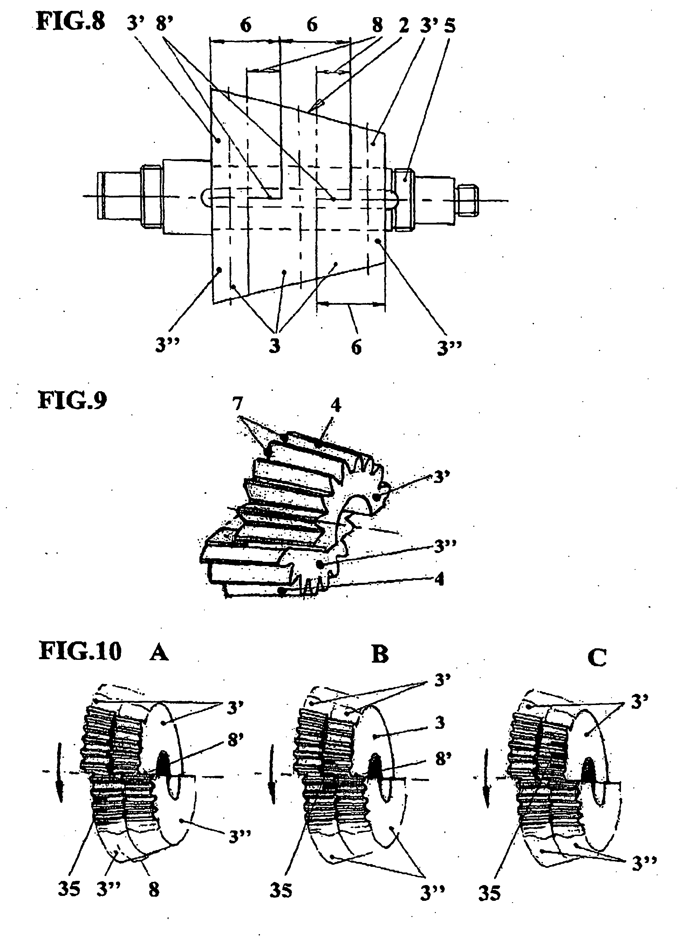

Die Erfindung ist nachfolgend anhand eines in der Zeichnung schematisch dargestellten Ausführungsbeispiels näher erläutert, wobei Fig. 1 eine Gesamtabbildung eines Schaltgetriebes, teilweise im Schnitt, veranschaulicht. Die Fig. 2 und 3 zeigen unterschiedliche Ausführungsformen für den Antrieb von Steuerscheiben des Schaltgetriebes. Fig. 4 veranschaulicht das Detail IV der Fig. 1, Fig. 5 die Kraftübertragung gemäß Detail V der Fig. 1, jedoch im Querschnitt, und Fig. 6 zeigt wiederum das Detail VI der Fig. 1. Fig. 8 ist eine Ansicht eines Spezialzahnradsatzes und Fig. 9 gibt ein einzelnes Zahnrad dieses Spezialzahnradsatzes wieder. Anhand der Fig. 10A, B und C ist der Schaltvorgang veranschaulicht.

In einem nicht näher dargestellten Getriebegehäuse 1 ist ein Spezialzahnradsatz 2 - nachfolgend auch Stufenräderkegel genannt -, wie er beispielsweise auch in Fig. 8 in etwas geänderter Ausführung veranschaulicht ist, drehbar gelagert. Dieser Spezialzahnradsatz 2 ist von konischen Zahnrädern 3 mit jeweils einer konischen Verzahnung 4, die gerade oder schräg sein kann, gebildet, wobei die einzelnen Zahnräder 3 drehfest und unverschiebbar an einer Welle 5 angeordnet sind. Die Zahnräder 3 weisen gleiche Module, jedoch unterschiedliche Teilkreisdurchmesser auf.

Jedes der Zahnräder 3 greift mit dem benachbarten Zahnrad 3 ineinander, und zwar dadurch, dass die Zahnräder jeweils axial verschobene Teile 3', 3" aufweisen, welche axial verschobenen Teile 3', 3" sich jeweils über etwa den halben Umfang erstrecken. Die axial verschobenen Teile 3', 3" jedes Zahnrades 3 sind um die Hälfte der Zahnbreite 6 ihrer Zähne 7 axial verschoben, wobei die Zähne 7 jedes Zahnrades 3 sich durchgehend über den Umfang des Zahnrades 3 mit etwa der Hälfte ihrer Breite 6 erstrecken. Weiters bildet jeweils ein Teil 3', 3" eines ersten Zahnrades 3 mit einem Teil 3', 3" eines benachbarten zweiten Zahnrades 3 eine sich um den gesamten Umfang erstreckende Übergangsstufe 8, die sich somit von einem Teil 3' des ersten Zahnrades 3 und von einem Teil 3" des zweiten Zahnrades zusammensetzt. Ein wichtiges Merkmal des Stufenräderkegels 2 ist darin zu sehen, dass jedes Zahnrad 3 mit dem benachbarten Zahnrad 3 durch Ineinandergreifen der axial verschobenen Teile 3', 3'' eine Übergangsstufe 8 mit einer Breite entsprechend etwa der Hälfte der Zahnbreite 6 der Zähne 7 jedes Zahnrades 3 bildet.

Das erste und das letzte Zahnrad 3 des Stufenräderkegels 2 ist jeweils ebenfalls von zwei axial verschobenen Teilen 3',3'' gebildet, wobei jedoch der jeweils vom Stufenräderkegel 2 nach außen verschobene Teil 3' bzw. 3" nur die Hälfte der Breite 6 des anderen axial verschobenen Teils 3" bzw. 3' aufweist.

Parallel zu einer Erzeugenden des Stufenräderkegels 2 ist eine Welle 9 im Getriebegehäuse 1 gelagert, entlang der ein mit den einzelnen Zahnrädern 3 des Stufenräderkegels 2 in Eingriff bringbares Gegenzahnrad 10 verschiebbar, jedoch drehfest gelagert ist. Zur Momentenübertragung vom Gegenzahnrad 10 auf die Welle 9 bzw. umgekehrt von der Welle 9 auf das Gegenzahnrad 10 kann die Welle 9 als Vielkeilwelle ausgebildet sein, es können jedoch auch, wie in Fig. 5 gezeigt, Kugeln 11, die zwischen der Nabe 12 des Gegenzahnrades 10 und der Welle 9 liegen, vorgesehen sein.

Bei einer Schrägverzahlung der Zahnräder 3 muss die Welle 9, auf der das ebenfalls schrägverazhnte Gegenzahnrad 10 verschiebbar ist, einen entsprechenden Drall aufweisen.

Zur Bewegung des Gegenzahnrades 10 entlang der Welle 9 dient eine Stelleinrichtung 14, wie eine in eine Ringnut 13 der Nabe 12 des Gegenzahnrades 10 eingreifende Schaltgabel 14, deren sich parallel zur Welle 9 erstreckender Teil 15 in einer Führung 16 des Getriebegehäuses verschiebbar ist. Zur Sicherung einer bestimmten Eingriffsposition dient eine Schnäpperkugel 17, die von einer Schnäpperfeder 18 in Ausnehmungen 19 des sich parallel zur Welle 9 erstreckenden Teils 15 der Schaltgabel 14 eingreifen, sodass das Gegenzahnrad 10 stets eine exakte Position gegenüber den Zahnrädern 3 des Stufenräderkegels 2 einnimmt.

Zur Bewegung der Schaltgabel 14, die im richtigen Augenblick erfolgen muss, und zwar knapp bevor der Übergang 8' von einem Zahnrad 3 des Stufenräderkegels 2 zum benachbarten Zahnrad 3 des Srufenräderkegels 2 zum Gegenzahnrad 10 gelangt, dient eine gemäß Fig. 1 koaxial zum Stufenräderkegel 2 an dessen Welle 5 drehfest angeordnete Steuerscheibe 20, die eine umlaufende Steuernut 21 aufweist, in die eine Laufrolle 22 oder ein Gleitstück 23 eines Steuerschiebers 24 ragt. Knapp nachdem der Übergang 8' das Cregenzahnrad 10 passiert hat, wird das Gegenzahnrad 10 in seine endgültige Position verschoben.

Die umlaufende Steuernut 21 der Steuerscheibe 20 ist derart gestaltet, dass bei einer Umdrehung der Steuerscheibe 20 der Steuerschieber 24 eine hin- und hergehende Bewegung vollführt, und zwar um jeweils eine Wegstrecke, die einem Schritt einer Bewegung des Gegenzahnrades 10 von einem Zahnrad 3 des Stufenräderkegels 2 zum benachbarten Zahnrad 3 des Stufenräderkegels 2, also der Zahnbreite 6, entspricht. Dieser Steuerschieber 24, der ebenfalls im Getriebegehäuse 1 verschiebbar gelagert ist, und zwar parallel zur Welle 9 des Gegenzahnrades 10, kann zum richtigen Schaltzeitpunkt mit dem sich parallel zur Welle 9 des Gegenzahnrades 10 erstreckenden Teil 15 der Schaltgabel 14 gekoppelt werden.

Zu diesem Zweck ist im Steuerschieber 24 ein Mitnahmebolzen 25 gelagert, der in zurückgezogener Position, wie sie in Fig. 6 veranschaulicht ist, über den Steuerschieber 24 nicht vorragt. Dieser Mitnahmebolzen 25 kann hydraulisch in eine vorgeschobene Position bewegt werden, in der er den Federbolzen 26 in den sich parallel zur Welle des Gegenzahnrads 10 erstreckenden Teil 15 der Schaltgabel 14 zurückdrückt, wodurch er teilweise in die Schaltgabel 14 ragt und eine Koppelung zwischen dem Steuerschieber 24 und der Schaltgabel 14 bewirkt ist. In diesem Fall wird die hin- oder hergehende Bewegung des Steuerschiebers 24 auf die Schaltgabel 14 übertragen und das Gegenzahnrad 10 dementsprechend entlang seiner Welle 9 verschoben. Die Anzahl der Federbolzen 26 stimmt mit der Anzahl der Zahnräder 3 des Stufenräderkegels 2 überein.

Der Steuerschieber 24 kann auch elektrisch betätigt werden, z.B. mittels eines Hubmagneten.

Um den richtigen Zeitpunkt des Verschiebens des Gegenzahnrades 10 sicherzustellen, ist an der Steuerscheibe 20 ein Positionsgeber 27 vorgesehen, der elektrisch, optisch oder mechanisch über ein Steuergerät 28 ein Hydraulikventil 29 zur Beaufschlagung des Mitnahmebolzens 25 des Steuerschiebers 24 mit Hydrauliköl betätigt.

Der Positionsgeber 27 kann als Hall- oder Induktivsensor ausgeführt sein. Weiters ist auch ein inkrementaler Drehgeber einsetzbar. Ein mechanischer Positionsgeber kann z.B. als Unterbrecherkontakt mit Nocke ausgebildet sein. Weiters wäre auch eine Pieezo-Abtastung oder fluidische Abtastung der Steuerscheibe 20 denkbar. Auche eine computergesteuerte Zustandsberechnung der Zahnstellung könnte den richtigen Zeitpunkt des Verschiebens des Gegenzahnrades 10 sicherstellen.

Nachdem das Gegenzahnrad 10 seine neue Position erreicht hat, wird der Hydraulikdruck gesenkt und der Federbolzen 26 drückt den Mitnahmebolzen 25 unter Entkoppelung des Steuerschiebers 24 von der Schaltgabel 14 in seine in Fig. 6 dargestellte Ausgangslage.

Zur Vermeidung eines ständigen Eingriffs der Laufrolle 22 bzw. des Gleitstücks 23 in der umlaufenden Steuernut 21 der Steuerscheibe 20 kann die Laufrolle 22 bzw. das Gleitstück 23 ebenfalls hydraulisch in eine Eingriffsstellung gedrückt werden, und zwar zu Beginn des Schaltvorgangs. Eine Vermeidung eines ständigen Eingriffs der Laufrolle 22 bzw. des Gleitstrückes 23 lässt sich auch elektrisch, z.B. mittels eines Hub- oder Zugmagneten verwirklichen.

In Fig. 7 ist ein Hydraulikkreis 30 im Detail veranschaulicht, der dazu dient, das Gleitstück 23 in die Steuernut 21 bei einem Schaltvorgang zu bringen (vgl. Fig. 4 und 7). Er weist einen Vorratsbehälter 31 und eine Hydraulikpumpe 32 auf. Das Hydraulikventil 33 ist, ebenso wie das Hydraulikventil 29, vorzugsweise als schnellschaltendes Hydraulikmagnetventil ausgebildet. Die Schaltung des Hydraulikventils 33 erfolgt ebenfalls über den Positionsgeber 27 und das Steuergerät 28.

Sobald jedoch der Schaltvorgang beendet ist, sinkt der Hydraulikdruck und eine Rückzugfeder 34 zieht das Gleitstück 23 wiederum in den Steuerschieber 24 zurück.

Anhand der Fig. 10A bis 10C ist der Schaltvorgang veranschaulicht, wobei die Stellung der Zähne 35 des Gegenzahnrades 10 durch schwarze Striche veranschaulicht ist. Der Schaltvorgang findet somit knapp vor Kontakt der Zähne 35 des Gegenzahnrades 10 mit dem Übergang 8', d.h. knapp vor dem Kontakt mit dem benachbarten Zahnrad 3, des Stufenräderkegels 2 start und ist knapp nachher beendet. Fig. 10B zeigt den Übertritt des Eingriffs der Zähne 35 des Gegenzahnrades 10 von einem Zahnrad 3 (Teil 3") des Stufenräderkegels 2 zum benachbarten Zahnrad 3 (Teil 3'). Gemäß Fig. 10C ist das Gegenzahnrad 10 weitergeschoben und der Schaltvorgang ist bereits nach weniger als einer halben Umdrehung der Zahnräder 3 beendet. Wichtig ist, dass die Breite der Zähne 35 nicht größer ist als die Breite der Übergangsstufe 8, sondern etwa der Hälfte der Zahnbreite 6 der Zahnräder 3 entspricht. Die exakte Definition der Steuernut 21 ermöglicht dem Schiebezahnrad den punktgenauen Übergang von einem Zahnrad 3 zum nächsten und ermöglicht so den Schaltvorgang.

Die Steuerscheibe 20 muss nicht an der Welle 5 des Stufenräderkegels 2 angeordnet sein, sie kann, wie in Fig. 2 gezeigt, auch extern am Getriebegehäuse 1 gelagert sein, wobei die Drehbewegung für die Steuerscheibe 20 über eine Getriebestufe 36 verwirklicht ist, und zwar mit Untersetzung (vgl. Fig. 3).

Eine solche Untersetzung kann auch über ein Zahnradgetriebe 37 erfolgen, wenn die Steuerscheibe 20 koaxial zur Welle 5 des Stufenräderkegels 2 vorgesehen ist, wobei dann eine Drehrelativbewegung zwischen der Steuerscheibe 20 und der Welle 5 des Stufenräderkegels 2 stattfindet (vgl. Fig. 2).

Gemäß Fig. 1 ist um den Umfang der Zahnräder 3 versetzt ein weiteres Gegenzahnrad 10 an einer Welle 9 angeordnet, wodurch sich die Gangzahl erhöht und die Übersetzungsverhältnisse vergrößern. Die Steuerung dieses weiteren Gegenzahnrades 10 erfolgt zweckmäßig wie oben beschrieben.

Um bei hohen Drehzahlen den Schaltzeitpunkt in Richtung "früher" zu verlegen, können ein Drehzahlgeber und Drehwinkelgeber vorgesehen sein.

Die Zahnzahlen der Zahnräder können wie folgt abgestuft sein:
12, 14, 16, 18, 20, 22,24 usw., also 2er Sprünge,
12. 16, 20, 24 usw., also 4er Sprünge,
ebenso ist auch eine unregelmäßige Abstufung verwirklichbar, z.B. bei 2er-Sprüngen dazwischen einen 3er-Sprung, wenn die Zahnzahl des Zahnrades des 3er-Sprunges durch zwei teilbar ist.

## Patentansprüche

1. Schaltgetriebe mit zwei oder mehreren an einer Welle (5) drehfest angeordneten, unterschiedliche Zähnezahlen aufweisenden Zahnrädern (3) mit jeweils einer konischen Verzahnung (4), schräg oder gerade, die nach Art eines Stufenräderkegels (2) an der Welle (5) angeordnet sind und mit einem wahlweise mit jeweils einem der Zahnräder (3), die gleiche Module und unterschiedliche Teilkreisdurchmesser aufweisen, in Eingriff bringbaren Gegenzahnrad (10) sowie einer einen Eingriff des Gegenzahnrads (10) mit unterschiedlichen Zahnrädern (3) bewirkenden Schaltvorrichtung, wobei den Stufenräderkegel (2) bildende Zahnräde (3) jeweils von zwei etwa um die Hälfte der Zahnbreite (6) ihrer Zähne (7) axial verschobenen Teilen (3', 3") gebildet sind, die sich jeweils um einen Teil um die Welle (5) erstrecken, wobei die Zähne (7) jedes Zahnrades (3) sich durchgehend über den Umfang des Zahnrader (3) mit etwa der Hälfte ihrer Breite (6) erstrecken und wobei weiters jeweils ein Teil (3') eines ersten Zahnrades (3) sich mit einem Teil (3") eines zweiten Zahnrades (3) ergänzt zu einer sich um den gesamten Umfang erstreckenden Übergangsstufe (8), und wobei weiters die Schaltvorrichtung ein Steuergerät (28) aufweist, das eine Stelleinrichtung (14) zur Durchführung einer Relativbewegung zwischen dem Stufenräderkegel (2) und dem Gegenzahnrad (10) ansteuert, wobei die Relativbewegung über das Steuergerät (28) in Abhängigkeit des Drehwinkels der Zahnräder (3) des Stufenräderkegels (10) über eine Zeitdauer erfolgt, die einen Bruchteil der Zeit für eine einzige Umdrehung des Stufenräderkegels (2) beträgt, Vorzugsweise über eine maximale Zeitdauer der Zeit, die der Srufenräderkegel (2) für eine halbe Umdrehung benötigt, und wobei der Schaltvorgang in Abhängigkeit der Eingriffposition der Zahnräder (3) des Stufenräderkegels (2) mit dem Gegenzahnrad (10) erfolgt, **dadurch gekennzeichnet, dass** mit dem Stufenräderkegel (2) eine Steuerscheibe (20) drehzahlmäßig gekoppelt ist, deren Schalt-Drehposition von einem Positionsgeber (27) detektierbar ist, wobei die Stelleinrichtung (14) mit der Steuerscheibe (20) mittels Aktivierung durch den Positionsgeber (27) koppelbar ist.

2. Schaltgetriebe nach Anspruch 1, **dadurch gekennzeichnet, dass** ein mechanisch wirkender Positionsgeber (27) vorgesehen ist.

3. Schaltgetriebe nach Anspruch 1, **dadurch gekennzeichnet, dass** ein optisch wirkender. Positionsgeber (27) vorgesehen ist.

4. Schaltgetriebe nach Anspruch 1, **dadurch gekennzeichnet, dass** ein elektrisch ansprechender Positionsgeber (27) vorgesehen ist.

5. Schaltgetriebe nach einem der Ansprüche 1 bis 4, **dadurch gekennzeichnet, dass** das Gegenzahnrad (10) mittels der Stelleinrichtung (14), vorzugsweise ausgebildet als Schaltgabel (14), entlang einer parallel zur Erzeugenden des Stufenräderkegels (2) angeordneten Welle (9) verschiebbar ist, wobei die Stelleinrichtung (14) mit einem Steuerschieber (24) koppelbar ist, vorzugsweise hydraulisch, welche Koppelung in Abhängigkeit einer Aktivierung durch den Positionsgeber (27) durchführbar ist.

6. Schaltgetriebe nach Anspruch 5, **dadurch gekennzeichnet, dass** der Steuerschieber (24) mittels einer mit einer Schaltkurve (21) versehenen Steuerscheibe (20) verschiebbar ist, wobei die Steuerscheibe (20) synchron oder in einem vorbestimmien Untersetzungsverhältnis mit der Welle (5) des Stufenräderkegels (2) drehbar ist.

7. Schaltgetriebe nach Anspruch 5 oder 6, **dadurch gekennzeichnet, dass** die Stelleinrichtung (14) mit jeweils in einer Ausnehmung verschiebbar gelagerten Federbolzen (26) versehen ist, die mit einem hydraulisch betätigbaren Mitnahmebolzen (25) des Steuerschiebers (24) bewegbar sind, wobei der Mitnahmebolzen (25) unter Zurückdrängen eines der Federbolzen (26) in die jeweilige Ausnehmung dieses Federbolzens (26) der Stelleinrichtung unter Koppelung des Steuerschiebers (24) mit der Stelleinrichtung (14) einbringbar ist.

8. Schaltgetriebe nach einem der Ansprüche 1 bis 7, **dadurch gekennzeichnet, dass** zum Schalten, d.h. Verschieben des Gegenzahnrades (10), das Steuergerät (28) betätigbar ist, bei dessen Betätigung ein Hydraulikventil (29), vorzugsweise ein Hydraulikmagnetventil, aus einer geschlossenen Position in eine offene, den Mitnahmebolzen (25) aktivierbaren Position bringbar ist, wobei der Zeitpunkt der Aktivierung des Hydraulikventils (29) vom Positionsgeber (27) bestimmbar ist.

9. Schaltgetriebe nach einem der Ansprüche 1 bis 8, **dadurch gekennzeichnet, dass** ein zweites Gegenzahnrad (10) auf einer eigenen weiteren Welle (9) vorgesehen ist und der Antrieb über das eine Gegenzahnrad (10) und der Abtrieb über das andere Gegenzahnrad (10) erfolgt.

## Claims

1. A shift transmission comprising two or several toothed wheels (3) exhibiting different numbers of teeth, arranged on a shaft (5) in a torque-proof manner and having one conical diagonal or linear gearing (4) each, which toothed wheels are arranged on the shaft (5) in the manner of a step wheel cone (2), and comprising a toothed counter wheel (10), which optionally can be engaged, in each case, with one of the toothed wheels (3) exhibiting equal modules and different reference diameters as well as a switchgear bringing about an engagement of the toothed counter wheel (10) with different toothed wheels (3), wherein toothed wheels (3) forming the step wheel cone (2) are formed, in each case, from two parts (3', 3") axially offset by approximately half the tooth width (6) of their teeth (7) and extending around the shaft (5) in each case by a part, wherein the teeth (7) of each toothed wheel (3) continuously extend across the circumference of the toothed wheel (3) with approximately half of their width (6) and, furthermore, wherein a part (3') of a first toothed wheel (3) is, in each case, completed by a part (3") of a second toothed wheel (3) to form a transition step (8) extending across the entire circumference and, furthermore, wherein the switchgear comprises a control device (28) which controls an actuator (14) for performing a relative motion between the step wheel cone (2) and the toothed counter wheel (10), with the relative motion occurring via the control device (28) as a function of the angle of rotation of the toothed wheels (3) of the step wheel cone (10) for a duration which is a fraction of the time for a single rotation of the step wheel cone (2), preferably for a maximum duration of the time required by the step wheel cone (2) for half a rotation, and wherein the switching process occurs as a function of the engagement position of the toothed wheels (3) of the step wheel cone (2) with the toothed counter wheel (10), **characterized in that** a control disk (20) is coupled in terms of rotational speed to the step wheel cone (2), with the rotational switching position of the control disk being detectable by a position transmitter (27), wherein the actuator (14) can be coupled to the control disk (20) via activation by the position transmitter (27).

2. A shift transmission according to claim 1, **characterized in that** a mechanically operative position transmitter (27) is provided.

3. A shift transmission according to claim 1, **characterized in that** an optically operative position transmitter (27) is provided.

4. A shift transmission according to claim 1, **characterized in that** an electrically responsive position transmitter (27) is provided.

5. A shift transmission according to any of claims 1 to 4, **characterized in that** the toothed counter wheel (10) is slidable along a shaft (9) arranged parallel to the generatrix of the step wheel cone (2) by means of the actuator (14), which is preferably designed as a shift-fork (14), wherein the actuator (14) can be coupled, preferably hydraulically, to a control slide (24), which coupling is feasible depending on an activation by the position transmitter (27).

6. A shift transmission according to claim 5, **characterized in that** the control slide (24) is slidable by means of a control disk (20) provided with a switch curve (21), with the control disk (20) being rotatable synchronously or, at a predetermined speed reducing ratio, with the shaft (5) of the step wheel cone (2).

7. A shift transmission according to claim 5 or 6, **characterized in that** the actuator (14) is provided with spring bolts (26), which, in each case, are slidably mounted in a recess and are movable with a hydraulically operable pulling pin (25) of the control slide (24), with the pulling pin (25) pushing back one of the spring bolts (26) and thus being insertable into the respective recess of said spring bolt (26) of the actuator, whereby the control slide (24) is coupled to the actuator (14).

8. A shift transmission according to any of claims 1 to 7, **characterized in that** the control device (28) is operable for switching, i.e., shifting the toothed counter wheel (10), wherein, during the operation thereof, a hydraulic valve (29), preferably a hydraulic solenoid valve, is movable from a closed position into an open position which is able to activate the pulling pin (25), with the moment of the activation of the hydraulic valve (29) being determinable by the position transmitter (27).

9. A shift transmission according to any of claims 1 to 8, **characterized in that** a second toothed counter wheel (10) is provided on a separate further shaft (9) and the input occurs via one toothed counter wheel (10) and the output occurs via the other toothed counter wheel (10).

## Revendications

1. Boîte de vitesses comprenant deux ou plusieurs engrenages (3) agencés solidairement en rotation sur un arbre (5) et présentant des nombres de dents différents, avec chacun une denture conique (4), oblique ou droite, qui sont agencés sur l'arbre (5) à la manière d'un cône (2) à roues en gradins, et un engrenage antagoniste (10) qui peut être amené au choix en engrènement avec l'un des engrenages (3), lesquels présentent les mêmes modules et des diamètres de cercle primitif différents, ainsi qu'un dispositif de commutation qui produit l'engrènement de l'engrenage antagoniste (10) avec différents engrenages (3), de sorte que les engrenages (3) qui forment le cône (2) à roues en gradins sont formés respectivement en deux parties (3', 3") déplacées axialement d'environ la moitié de la largeur (6) de leurs dents (7) et s'étendant chacune autour d'une partie de l'arbre (5), dans laquelle les dents (7) de chaque engrenage (3) s'étendent en continu sur la périphérie de l'engrenage (3) avec environ la moitié de leur largeur (6), et dans laquelle une partie (3') d'un premier engrenage (3) est respectivement complétée par une partie (3") d'un second engrenage (3) pour former un étage de transition (8) qui s'étend sur la totalité de la périphérie, et dans laquelle le dispositif de commutation comprend encore un appareil de commande (28) qui pilote un dispositif de positionnement (14) pour exécuter un mouvement relatif entre le coin (2) à roues coniques et l'engrenage antagoniste (10), dans laquelle le mouvement relatif a lieu via l'appareil de commande (28) en fonction de l'angle de rotation des engrenages (3) du cône (10) à roues en gradins pendant une durée temporelle qui est égale à une fraction du temps pour une unique rotation du cône (2) à roues en gradins, de préférence sur une durée temporelle maximum du temps qui est nécessaire au coin (2) à roues en gradins pour une demi-rotation, et dans laquelle le processus de commutation a lieu en fonction de la position d'engrènement des engrenages (3) du cône (2) à roues en gradins avec l'engrenage antagoniste (10),
**caractérisée en ce qu'**un disque de commande (20) est accouplé au cône (2) à roues en gradins en termes de vitesse de rotation, la position de rotation de commutation du disque de commande pouvant être détectée par un détecteur de position (27), et le dispositif de positionnement (14) est susceptible d'être accouplé au disque de commande (20) au moyen d'une activation par le détecteur de position (27).

2. Boîte de vitesses selon la revendication 1, **caractérisée en ce qu'**il est prévu un détecteur de position (27) à fonctionnement mécanique.

3. Boîte de vitesses selon la revendication 1, **caractérisée en ce qu'**il est prévu un détecteur de position (27) à fonctionnement optique.

4. Boîte de vitesses selon la revendication 1, **caractérisée en ce qu'**il est prévu un détecteur de position (27) à réaction électrique.

5. Boîte de vitesses selon l'une des revendications 1 à 4, **caractérisée en ce que** l'engrenage antagoniste (10) est déplaçable au moyen du dispositif de positionnement (14), réalisé de préférence sous forme de fourchette de commutation (14), le long d'un arbre (9) agencé parallèlement aux génératrices du cône (2) à roues en gradins, et le dispositif de positionnement (14) est susceptible d'être accouplé avec un tiroir de commande (24), de préférence hydraulique, l'accouplement pouvant être exécuté en fonction d'une activation par le détecteur de position (27).

6. Boîte de vitesses selon la revendication 5, **caractérisée en ce que** le tiroir de commande (24) est déplaçable au moyen d'un disque de commande (20) pourvu d'une came de commutation (21), ledit disque de commande (20) étant capable de rotation de manière synchrone ou dans un rapport de démultiplication prédéterminé avec l'arbre (5) du cône (2) à roues en gradins.

7. Boîte de vitesses selon la revendication 5 ou 6, **caractérisée en ce que** le dispositif de positionnement (14) est pourvu de goujons à ressort (26) montés en déplacement dans un évidement, qui peuvent être déplacés au moyen d'un goujon d'entraînement (25) à actionnement hydraulique du tiroir de commande (24), le goujon d'entraînement (25) pouvant être amené, en repoussant l'un des goujons à ressort (26), dans l'évidement respectif de ce goujon à ressort (26) du dispositif de positionnement avec accouplement du tiroir de commande (24) avec le dispositif de positionnement (14).

8. Boîte de vitesses selon l'une des revendications 1 à 7, **caractérisée en ce que** pour la commutation, c'est-à-dire pour le déplacement de l'engrenage antagoniste (10), l'appareil de commande (28) est susceptible d'être actionné, et lors de son actionnement, une vanne hydraulique (29), de préférence une vanne magnétique hydraulique, peut être amenée depuis une position fermée jusque dans une position ouverte qui active le goujon d'entraînement (25), et l'instant de l'activation de la vanne hydraulique (29) peut être déterminé par le détecteur de position (27).

9. Boîte de vitesses selon l'une des revendications 1 à 8, **caractérisée en ce qu'**un second engrenage antagoniste (10) est prévu sur un autre arbre propre (9), et l'entraînement a lieu via ledit engrenage antagoniste (10) et la prise de mouvement à lieu via l'autre engrenage antagoniste (10).
